(19) **Europäisches Patentamt / European Patent Office / Office européen des brevets**

(11) **EP 2 196 845 B1**

(12) **FASCICULE DE BREVET EUROPEEN**

(45) Date de publication et mention de la délivrance du brevet:
**03.06.2015 Bulletin 2015/23**

(51) Int Cl.:
***G02C 13/00*** *(2006.01)*

(21) Numéro de dépôt: **09290889.6**

(22) Date de dépôt: **30.11.2009**

(54) **Procédé de préparation d'une lentille ophtalmique en vue de son montage sur une monture de lunettes cambrée**

Verfahren zur Vorbereitung einer ophthalmischen Linse zwecks ihres Einbaus in eine gewölbte Brillenfassung

Method for preparing an ophthalmic lens in order to mount it on a curved spectacle frame

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **12.12.2008 FR 0806986**

(43) Date de publication de la demande:
**16.06.2010 Bulletin 2010/24**

(73) Titulaire: **Essilor International (Compagnie Générale d'Optique) 94220 Charenton-le-Pont (FR)**

(72) Inventeur: **Boutinon, Stéphane 94220 Charenton-le-Pont (FR)**

(74) Mandataire: **Chauvin, Vincent et al Coralis 14/16, rue Ballu 75009 Paris (FR)**

(56) Documents cités:
**WO-A-2007/012713      WO-A-2007/128925
FR-A- 2 906 047      FR-A- 2 910 647
FR-A- 2 915 290**

**Description**

La présente invention concerne de manière générale le domaine de la lunetterie et plus précisément le montage de lentilles ophtalmiques d'une paire de lunettes correctrices sur une monture.

Elle concerne plus particulièrement un procédé de préparation d'une lentille ophtalmique en vue de son montage dans un cercle d'une monture de lunettes.

L'invention trouve une application particulièrement avantageuse dans le centrage des lentilles ophtalmiques à monter sur des montures de lunettes fortement cambrées.

ARRIERE-PLAN TECHNOLOGIQUE

La partie technique du métier de l'opticien consiste à monter une paire de lentilles ophtalmiques sur une monture sélectionnée par un porteur. Ce montage se décompose en quatre opérations principales :

- la lecture du contour des drageoirs des cercles de la monture sélectionnée par le porteur, c'est-à-dire du contour des rainures qui parcourent l'intérieur de chaque cercle de la monture, ladite lecture fournissant une image de la forme du contour final selon lequel chaque lentille ophtalmique devra être détourée ;
- le centrage de chaque lentille qui consiste à déterminer la position qu'occupera chaque lentille sur la monture afin d'être convenablement centrée en regard de la pupille de l'oeil du porteur, de manière à ce qu'elle exerce convenablement la fonction optique pour laquelle elle a été conçue ;
- le blocage de chaque lentille qui consiste à déposer un organe de blocage sur chaque lentille en une position déduite des paramètres de centrage définis ; et
- le détourage de chaque lentille qui consiste à usiner ou à découper la lentille selon le contour palpé sur la monture, alors qu'elle est maintenue au moyen de l'organe de blocage.

Dans le cadre de la présente invention, on s'intéresse à la deuxième opération dite de centrage. Il s'agit, concrètement, pour l'opticien, de définir la position que devra occuper le contour final (dont la position est repérée par un point pupillaire) par rapport au référentiel optique de ladite lentille (dont la position est repérée par un point de centrage optique), de manière à ce que la lentille soit convenablement positionnée en regard de la pupille de l'oeil du porteur pour exercer au mieux la fonction optique pour laquelle elle a été conçue.

Cette opération consiste, dans un premier temps, à positionner le contour final de la lentille sur le point de centrage de la lentille, de manière qu'une fois centrée, la ligne du regard du porteur passe par le point de centrage de la lentille.

Cette opération consiste ensuite, dans un second temps, à orienter le contour final de la lentille autour du point de centrage de la lentille, de manière qu'une fois orientée, l'axe de référence de la lentille (typiquement son axe de cylindre ou son axe de l'horizontale) présente un angle voulu par rapport à la ligne d'horizon de la monture.

La demanderesse a constaté que, malgré le soin apporté à la réalisation de ces quatre opérations, il arrive que les lentilles ophtalmiques ne soient pas correctement positionnées par rapport à la monture, entraînant alors une gêne visuelle pour le porteur.

On connaît par ailleurs du document WO 2007/128925 un procédé de centrage du type précité, au cours duquel la position du contour final par rapport au point de centrage optique de la lentille est corrigée en fonction du galbe de la monture. Toutefois, même avec une telle correction, des erreurs de centrage demeurent.

OBJET DE L'INVENTION

Un but de la présente invention est de proposer un procédé de préparation permettant d'éviter ou tout au moins de réduire l'erreur de centrage et d'orientation des lentilles ophtalmiques sur la monture de lunettes choisie par le porteur.

Plus particulièrement, on propose selon l'invention un procédé de préparation d'une lentille ophtalmique en vue de son montage dans un cercle d'une monture de lunettes, comportant les étapes énumérées dans la revendication 1.

Le marché de l'optique évolue et propose un nombre croissant de montures de lunettes de vue fortement cambrées, c'est-à-dire fortement galbées pour envelopper le visage du porteur. Dans ces montures, le plan moyen de chaque cercle est fortement incliné par rapport au plan général de la monture.

La demanderesse a analysé, dans le cadre de ses travaux de recherche, que les erreurs de centrage provenaient du fait que l'acquisition de la position de la ligne d'horizon de la monture était réalisée dans le plan général de la monture, alors que l'orientation du contour final de la lentille était réalisée dans le plan de la lentille, c'est-à-dire dans le plan du cercle de la monture.

Ces deux plans pouvant être fortement inclinés l'un par rapport à l'autre et l'orientation du contour sur la lentille ne tenant pas compte de cette inclinaison, la cambrure de la monture induisait alors une erreur de centrage.

Autant cette erreur de centrage n'avait aucune influence sur les lentilles ophtalmiques à puissance sphérique, autant elle entraînait une gêne pour les porteurs de lunettes dont les lentilles ophtalmiques présentaient des puissances ophtalmiques cylindriques et/ou prismatiques. De telles lentilles doivent en effet être orientées avec soin sur la monture de lunettes du porteur pour parfaitement exercer les fonctions optiques pour lesquelles elles ont été conçues.

Ici, grâce à l'invention, l'orientation du contour final est alors calculée en fonction d'un paramètre général relatif au galbe de la monture, de manière à annuler ces erreurs de centrage.

Ce paramètre général est préférentiellement un paramètre de galbe, c'est-à-dire un paramètre relatif à l'angle de galbe formé entre le plan moyen de chaque cercle et le plan général de la monture.

Ce paramètre général pourra également, en variante, être un paramètre de compensation de galbe, c'est-à-dire un paramètre relatif à la correction angulaire à apporter à l'orientation du contour final pour compenser l'erreur de centrage due au galbe de la monture.

D'autres caractéristiques avantageuses et non limitatives de l'invention sont énumérées dans les revendications 2 à 15.

## DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Sur les dessins annexés :

- la figure 1 est une vue schématique de côté d'une paire de lunettes cerclée ;
- la figure 2 est une vue schématique en coupe selon le plan E-E de la paire de lunettes de la figure 1 ;
- la figure 3 est une projection dans le plan d'un profil longitudinal représentatif de la forme de l'un des cercles de la monture de la paire de lunettes de la figure 1 ;
- la figure 4 est une vue schématique de face d'une lentille ophtalmique non détourée ;
- la figure 5 est une vue schématique de face de la lentille ophtalmique de la figure 4, sur laquelle le profil longitudinal de la figure 3 a été superposé ;
- la figure 6 est une vue schématique de face de la lentille ophtalmique de la figure 4, sur laquelle le profil longitudinal de la figure 3 a été mis en coïncidence ;
- la figure 7 est une vue générale en perspective d'un dispositif centreur-bloqueur ;
- la figure 8 est un schéma optique du dispositif de la figure 7 ;
- la figure 9 est une vue schématique d'un appareil de détourage ; et
- la figure 10 est une vue schématique de l'écran du dispositif de la figure 7.

L'objectif du procédé de préparation selon l'invention est de déterminer la position que doivent occuper deux lentilles ophtalmiques 10, à savoir une lentille ophtalmique gauche et une lentille ophtalmique droite, sur une monture 20 de lunettes afin d'être convenablement centrées en regard des pupilles des yeux du porteur, de manière à ce qu'elles exercent convenablement les fonctions optiques pour lesquelles elles ont été conçues. On décrira ici plus précisément le procédé de préparation utilisé pour centrer la lentille ophtalmique 10 gauche sur le cercle 21 gauche de la monture 20.

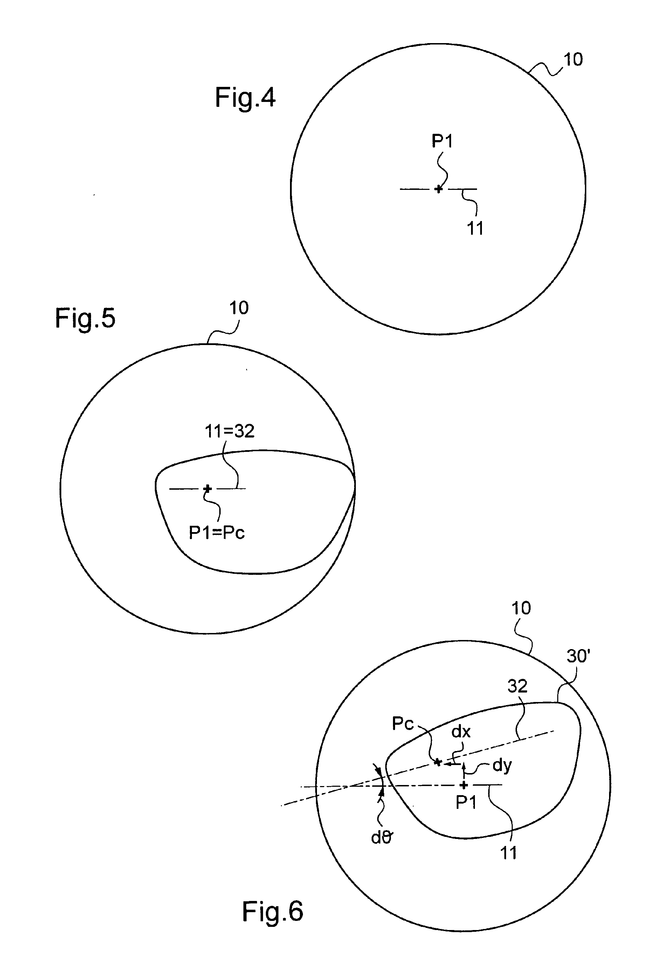

Comme le montre la figure 6, il s'agit concrètement, pour l'opticien, de définir la position d'un profil longitudinal 30', selon lequel la lentille ophtalmique 10 devra être détourée, par rapport au référentiel optique de ladite lentille (typiquement, ses marques usuelles ou son point de centrage optique P1).

La mise en oeuvre du procédé trouve une application particulièrement avantageuse par l'implémentation d'un programme apte à exécuter les étapes du procédé de centrage décrit, dans un logiciel intégré à un dispositif de centrage ou à un dispositif de blocage ou à un dispositif de détourage pourvu d'une unité de traitement et éventuellement d'un écran de contrôle.

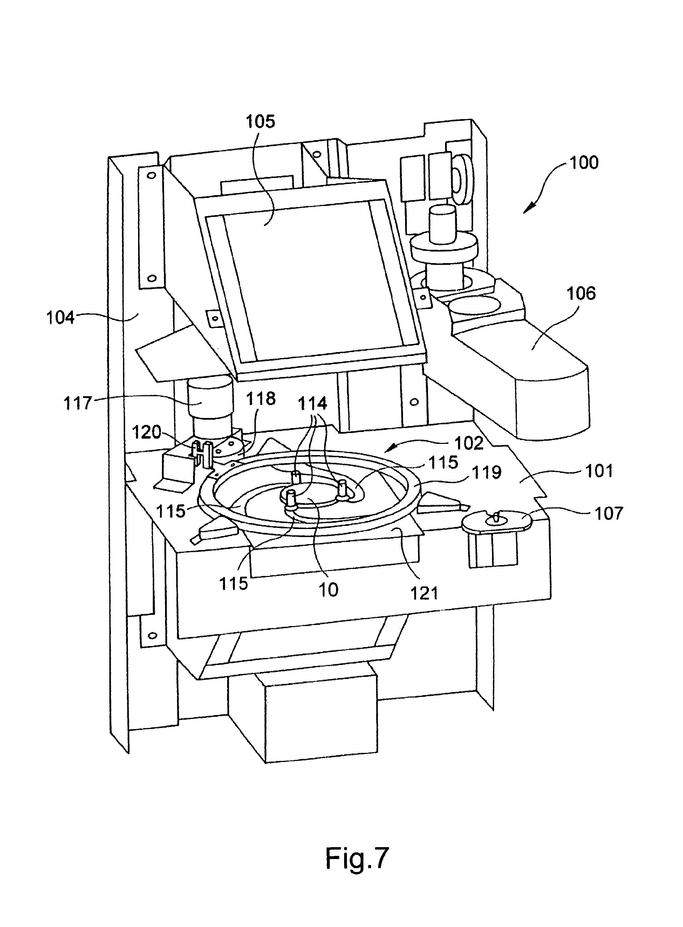

Sur la figure 7 on a représenté schématiquement un mode de réalisation d'un dispositif centreur-bloqueur 100 qui comporte un pupitre de travail 101 sur lequel est disposé un mécanisme de centrage 102 d'une lentille ophtalmique 10.

Le dispositif centreur-bloqueur 100 comporte en outre un écran de visualisation 105 fixé sur le bâti 104 de manière à être orienté pour être visible de l'utilisateur travaillant au pupitre de travail 101.

Le mécanisme de centrage 102 du pupitre de travail 101 comporte ici un jeu de trois mors 114 à serrage concentrique portés chacun par un bras 115 pivotant autour d'un axe (non visible sur la figure 7) fixe par rapport au pupitre de travail 101. Les bras sont agencés de manière que leur rotation conjointe autour de leur axe respectif permet le rapprochement des trois mors 114.

Le serrage des mors 114 est commandé par un moteur 117 dont l'axe est solidaire d'un pignon 118 engrenant sur une couronne 119 adaptée à entraîner les bras 115 en rotation autour de leur axe.

Les bras 115 comportent en effet chacun une portion dentée semi-circulaire (non représentée) engrenant avec la périphérie externe de la couronne 119.

La rotation du pignon 118, sous l'action du moteur 117, entraîne ainsi en rotation la couronne 119 pour provoquer le serrage ou le desserrage des mors 114, en fonction du sens dans lequel est entraînée la couronne 119. Une cellule 120, optique ou électromagnétique, permet au moteur 117 de connaître la position de la couronne 119.

L'ensemble formé par les bras 115 portant les mors 114, et par la couronne 119 est disposé au-dessus d'une plaque support 121 adaptée à laisser passer la lumière.

Par ailleurs, le dispositif centreur-bloqueur comporte un bras de positionnement 106, préférentiellement automatisé, relié au bâti 104, et adapté à prendre à l'aide d'une pince un organe de blocage disposé sur un réceptacle 107 et à venir le déposer à un emplacement déterminé par calcul sur la face avant de ladite lentille ophtalmique 10.

Dans cette optique, le dispositif centreur-bloqueur 100 est adapté à détecter la position d'un repère de centrage et/ou d'axage de la lentille ophtalmique 10.

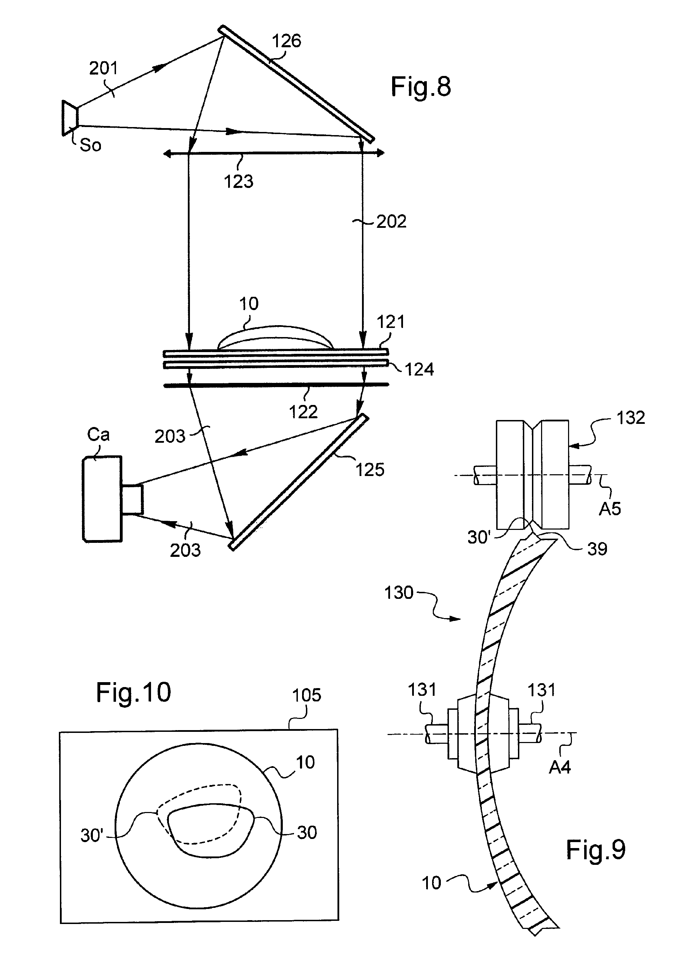

Pour cela, comme le montre schématiquement la figure 8, il comprend avantageusement :

- un moyen d'accueil de la lentille ophtalmique 10,
- de part et d'autre dudit moyen d'accueil, d'une part, des moyens d'éclairement de la lentille ophtalmique 10 installée sur ledit moyen d'accueil et, d'autre part, des moyens d'acquisition et d'analyse de la lumière transmise par ladite lentille ophtalmique 10, et
- un support transparent 124 pour afficher un signe opaque, activable et désactivable, disposé entre ledit moyen d'accueil et lesdits moyens d'acquisition et d'analyse.

Le moyen d'accueil est constitué ici par la plaque support 121 transparente à la lumière.

Selon l'exemple représenté, les moyens d'éclairement comprennent une source de lumière So qui émet un faisceau lumineux divergent 201 en direction d'un système de renvoi comportant un miroir 126 incliné à 45° et une lentille convergente 123 adaptée à former un flux lumineux 202 à rayons parallèles en direction de la lentille ophtalmique 10 déposée sur la plaque support 121 avec sa face avant, pourvue du ou des repères de centrage et/ou d'axage, tournée vers ladite lentille convergente 123.

Les moyens d'acquisition et d'analyse comprennent ici une caméra numérique Ca, des moyens de traitement d'image (non représentés) adaptés à traiter le signal obtenu en sortie de la caméra numérique Ca et des moyens d'affichage du signal traité constitué par l'écran de visualisation 105. Lesdits moyens d'acquisition et d'analyse comprennent entre le support de signe transparent 124 et la caméra numérique Ca un système optique de renvoi du faisceau lumineux transmis par la lentille ophtalmique 10 comportant une plaque dépolie 122 formant écran et un miroir 125 incliné à 45°. La caméra numérique Ca recueille, via le renvoi angulaire optique opéré par le miroir incliné 125, les images ou ombres projetées sur l'écran dépoli 122.

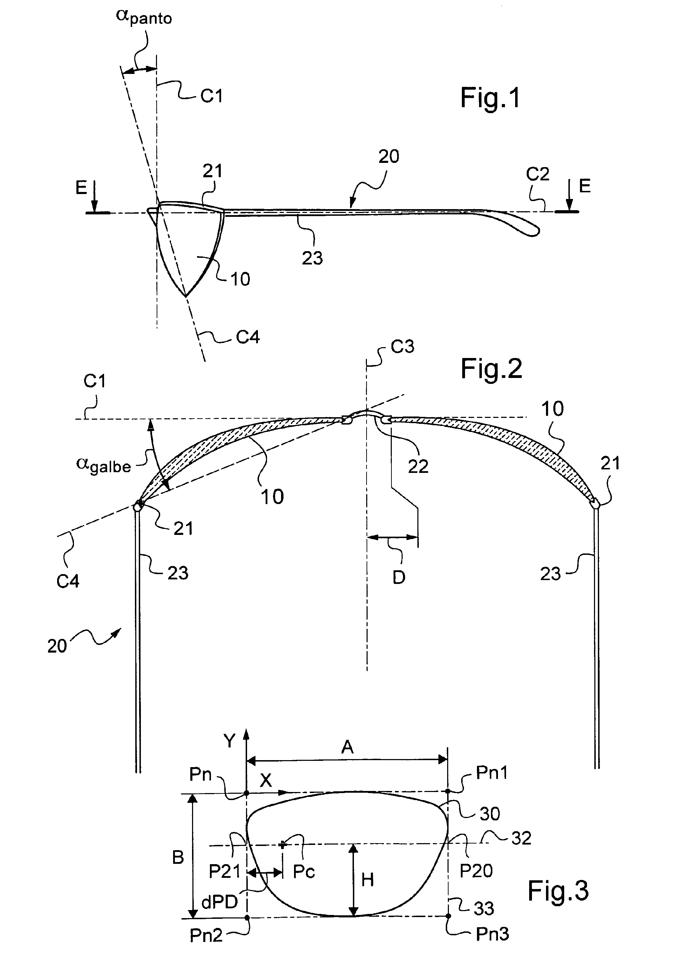

Telle que représentée sur les figures 1 et 2, la monture 20 de lunettes est de type cerclé. Bien sûr, ce procédé sera également applicable au centrage des lentilles sur des montures de lunettes semi-cerclées (à arcades) ou percées.

Préalablement à la mise en oeuvre du procédé de centrage, l'opticien fait choisir au futur porteur la forme de la monture 20 qu'il désire. Ce choix est réalisé parmi des montures 20 de lunettes de présentation que possède l'opticien. En variante, ce choix pourrait également être réalisé sur un écran d'ordinateur, au moyen d'un registre de base de données mémorisant une pluralité de formes de montures de lunettes.

Comme le montrent plus particulièrement les figures 1 et 2, chaque monture 20 de lunettes comprend deux cercles 21 destinés chacun à accueillir une lentille ophtalmique 10 droite ou gauche. Ces deux cercles 21 comportent chacun intérieurement une rainure longitudinale (appelée drageoir) destinée à s'emboîter sur une nervure d'emboîtement (appelée biseau) courant le long de la tranche de la lentille correspondante. Les deux cercles 21 sont reliés l'un à l'autre par un pont ou pontet 22 et sont chacun pourvus d'une branche 23.

On définit relativement à la monture 20 un plan sensiblement horizontal C2 correspondant au plan passant par les deux branches 23 de la monture 20 lorsqu'elles sont en position dépliée. On définit également un plan vertical C3 correspondant au plan de symétrie de la monture 20. On définit aussi le plan général C1 de la monture 20 comme le plan qui passe par le sommet du pontet 22 de la monture 20 et qui est orthogonal, d'une part, au plan vertical C3 de la monture 20, et, d'autre part, au plan horizontal C2 de la monture 20. On définit enfin le plan moyen C4 de chaque cercle 21 comme le plan qui passe au plus près de l'ensemble des points du fond du drageoir de ce cercle. Les coordonnées de ce plan peuvent par exemple être obtenues en appliquant la méthode des moindres carrés aux coordonnées d'une pluralité de points du fond du drageoir.

Consécutivement au choix de la monture par le porteur, l'opticien acquiert la géométrie d'un profil longitudinal 30 correspondant à la ligne de fond du drageoir du cercle gauche 21 de la monture 20. Préférentiellement, il utilise à cet effet un appareil de lecture de contours tel que par exemple celui décrit dans le brevet US 5 802 731. Un exemple d'un tel appareil est celui commercialisé par Essilor International sous la marque Kappa ou encore Kappa CT.

Pour acquérir la géométrie de ce profil longitudinal 30, l'opticien bloque la monture de lunettes dans l'appareil, puis démarre la séquence de palpage des deux cercles de la monture de lunettes 20. Au cours de cette opération, un palpeur vient suivre, avec ou sans contact, le fond du drageoir du premier puis du second cercle, de manière à relever une image numérique tridimensionnelle des premiers profils longitudinaux 30 des deux cercles. Par palpage avec ou sans contact, on entend un palpage par glissement mécanique du palpeur le long du drageoir ou par lecture optique.

Dans le cas des montures fortement galbées, c'est-à-dire fortement cambrées, une telle lecture n'est pas possible. En effet, lorsque le palpeur palpe les zones temporales de la monture, la forte inclinaison du drageoir provoque la sortie du palpeur hors de ce drageoir.

La solution envisagée consiste alors à palper séparément chaque cercle de la monture, en inclinant au préalable la monture de manière que le plan moyen du cercle à palper soit sensiblement perpendiculaire à l'axe de rotation du palpeur. Cette solution s'avère efficace puisqu'elle réduit l'inclinaison du drageoir vu par le palpeur dans la zone temporale du cercle, ce qui évite que le palpeur ne sorte du drageoir. En utilisant cette méthode, on obtient alors deux images numériques tridimensionnelles sur chacune desquelles apparaît le profil longitudinal 30 de l'un des deux cercles de la monture 20.

Une fois ce palpage réalisé, la forme du profil longitudinal 30 est mémorisée dans l'unité de traitement du dispositif de centrage. Cette unité de traitement mémorise également la position d'un trait d'horizon 32 de la monture de lunettes 20 pour permettre le repérage de l'orientation angulaire du profil longitudinal 30 par rapport à l'horizontale.

Par convention, comme le montre la figure 3, on définit par rapport au profil longitudinal 30 un cadre 33 dit « boxing » bien connu de l'homme du métier, qui correspond au cadre rectangulaire virtuel circonscrit au profil longitudinal 30. Ce cadre boxing 33 est orienté par rapport au profil longitudinal 30 de manière que deux de ses bords soient parallèles au trait d'horizon 32. Il présente une longueur A et une hauteur B. Ce cadre 33 présente un coin supérieur gauche Pn (côté pontet 22), un coin supérieur droit Pn1 (côté branche 23), un coin inférieur gauche Pn2 et un coin inférieur droit Pn3.

L'opticien acquiert également des valeurs caractéristiques de la forme globale de la monture 20 choisie par le porteur.

On définit pour cela, en référence aux figures 1 et 2, deux angles caractéristiques de la forme globale de la monture 20, dont un angle de galbe $\alpha_{galbe}$ et un angle pantoscopique $\alpha_{panto}$.

L'angle de galbe $\alpha_{galbe}$ correspond à l'angle formé, dans le plan horizontal C2, entre le plan moyen C4 du cercle gauche 21 et le plan général C1 de la monture 20.

L'angle pantoscopique $\alpha_{panto}$ correspond à l'angle formé, dans le plan de symétrie C3, entre le plan moyen C4 du cercle gauche 21 et le plan général C1 de la monture 20.

Ces valeurs d'angles peuvent être obtenues de différentes manières.

Une première méthode consiste, lorsque les deux premiers profils longitudinaux 30 apparaissent sur une seule et même image numérique tridimensionnelle, à comparer les positions relatives de ces deux premiers profils longitudinaux 30 de manière à déduire l'angle de galbe $\alpha_{galbe}$.

Une seconde méthode consiste à mesurer ou à estimer ces valeurs d'angles, et à les saisir manuellement sur une interface homme-machine du dispositif de centrage. Pour mesurer l'angle de galbe $\alpha_{galbe}$, l'opticien pourra s'aider d'un abaque de mesure. Un tel abaque comporte par exemple deux faisceaux de traits séparés l'un de l'autre d'une longueur égale à celle du pontet. Chaque trait de chaque faisceau présente une inclinaison déterminée qui correspond à un angle de galbe particulier de la monture. Pour utiliser cet abaque, l'utilisateur doit positionner la monture de lunettes sur l'écran, de telle sorte que les deux cercles de la monture se superposent à deux des traits de l'abaque. De cette manière, il peut, en lisant l'inclinaison relative de ces deux traits, déterminer avec précision l'angle de galbe de la monture et le mémoriser en vue du détourage des lentilles. Pour mesurer l'angle pantoscopique $\alpha_{panto}$, l'opticien pourra s'aider d'outils tels que des « clips de monturisation » qui sont des éléments à fixer aux branches des montures et qui permettent de lire, de côté, l'inclinaison des cercles par rapport aux branches.

Une troisième méthode consiste à utiliser un registre de base de données accessible à l'opticien ou au dispositif de centrage. Un tel registre comporte une pluralité d'enregistrements chacun associés à un type de montures de lunettes référencé. Chaque enregistrement comprend alors un identifiant de ce type de montures, ainsi que les valeurs des angles de galbe $\alpha_{galbe}$ et pantoscopique $\alpha_{panto}$ associés à ce type de montures.

Les valeurs d'angles de galbe et pantoscopique de la monture de lunettes 20 sélectionnée par le porteur sont alors acquises en recherchant dans le registre un enregistrement correspondant à cette monture de lunettes, et, si un tel enregistrement correspondant est trouvé, en lisant dans cet enregistrement les angles de galbe $\alpha_{galbe}$ et pantoscopique $\alpha_{panto}$ associés. A titre d'exemple, l'identifiant pourra être constitué par la référence de la monture ou par le nom du modèle de la monture.

Quoi qu'il en soit, l'opticien procède ensuite au repérage de la position d'un point pupillaire Pc du porteur par rapport au profil longitudinal 30 (figure 3). Ce point pupillaire Pc correspond au point disposé en regard de la pupille de l'oeil du porteur, sur la face avant de la lentille, lorsque le porteur porte la monture de lunettes 20. La position du point pupillaire Pc est généralement repérée par rapport au cadre boxing 33. Pour cela, l'opticien équipe le porteur de la monture de lunettes 20 qu'il a choisie, puis il pointe manuellement sur chacune des lentilles de présentation livrées avec la monture le point pupillaire Pc correspondant au point positionné en regard de la pupille de l'oeil du porteur.

Pour repérer la position du point pupillaire Pc par rapport au cadre boxing 33, l'opticien mesure ensuite à l'aide d'un réglet, dans le plan général C1 de la monture 20, deux paramètres liés à la morphologie du porteur. Il acquiert le demi-écart inter-pupillaire dPD défini comme la distance séparant horizontalement le point pupillaire Pc et le bord gauche du cadre boxing 33. Il acquiert également la hauteur pupillaire H de la pupille gauche du porteur en déterminant la distance séparant verticalement le point pupillaire Pc du bord inférieur du cadre boxing 33. La connaissance de ces deux paramètres permet ainsi de situer la position du profil longitudinal 30 relativement au point pupillaire Pc.

En variante, l'opticien pourrait réaliser cette opération à l'aide d'un pupillomètre ou d'un logiciel d'acquisition et de traitement numérique d'images tel que décrit dans les documents US 5617155A et ES 2043546, qui réalise une identification du point pupillaire Pc à partir d'une photo numérique du visage du porteur équipé de sa monture de lunettes.

Comme le montre la figure 4, l'opticien dispose par ailleurs d'une lentille ophtalmique 10 non détourée, dont les propriétés de réfringence correspondent à la prescription du porteur. Cette prescription correspond à la correction à apporter à chaque oeil du porteur de manière qu'il retrouve une bonne acuité visuelle en vision de près et/ou de loin, selon que la lentille est une lentille unifocale, bi-focale ou à addition progressive de puissances.

Les propriétés de réfringence de la lentille sont généralement définies en termes de puissances de réfringence. On ne définira ici que deux de ces puissances de réfringence, à savoir sa puissance de réfringence sphérique et sa puissance de réfringence cylindrique.

La « puissance de réfringence sphérique » d'une lentille pour un faisceau de rayons incident traversant cette lentille (également appelée puissance totale ou puissance réfringente ou puissance de focalisation ou puissance optique sphérique), est définie comme la grandeur qui caractérise et quantifie le premier effet de réfringence sphérique (effet « loupe ») de la lentille sur le faisceau de rayons considéré : si elle est positive, la lentille a un effet convergent sur le faisceau de rayons ; si elle est négative, l'effet sur le faisceau de rayons est divergent. Le point de la lentille où l'effet loupe est nul (c'est-à-dire, dans le cas d'une lentille ayant une puissance optique exclusivement sphérique, le point où le rayon incident et le rayon transmis ont même axe) est appelé point de centrage optique.

La « puissance de réfringence cylindrique » d'une lentille pour un rayon incident traversant cette lentille (également appelée puissance optique cylindrique) est quant à elle définie comme la grandeur qui caractérise et quantifie l'effet de réfringence cylindrique exercé par la lentille sur le rayon considéré, selon lequel il se forme non pas une seule mais deux aires focales, situées dans des plans différents, généralement perpendiculaires entre elles et appelées focales tangentielle et focale sagittale. Cette puissance cylindrique, également appelée « puissance d'astigmatisme » ou simplement « astigmatisme », correspond à la différence des puissances sphériques suivant les deux aires focales. Les deux aires sont repérées par un axe passant par leur « point de centrage optique », communément appelé axe de cylindre. Cet axe de cylindre est généralement défini en degrés, par rapport à une ligne de repérage de la lentille.

La lentille ophtalmique 10 non détourée présente un contour initial de forme connue, généralement circulaire, et un point de centrage optique P1 de position connue. La lentille ophtalmique 10 non détourée est repérée dans l'espace par son point de centrage optique P1 et par une ligne de repérage 11 permettant de repérer son orientation autour de son point de centrage optique P1.

La détection de la position du point de centrage optique P1 de la lentille ophtalmique 10 (généralement distinct de son centre géométrique) et de celle de sa ligne de repérage 11 peuvent être effectuées par diverses techniques, en fonction du type de la lentille ophtalmique et du matériel à la disposition de l'opticien. Par exemple, cette technique peut être de type déflectométrique, interférométrique ou encore traitement d'images. Elle sera ici préférentiellement mise en oeuvre au moyen du dispositif centreur-bloqueur 100 précité.

Dans le cas d'une lentille ophtalmique unifocale, le dispositif utilisé permettra de déterminer l'orientation de l'axe de cylindre de la lentille par rapport à sa ligne de repérage 11. Dans le cas d'une lentille ophtalmique à variation progressive de puissance (verre progressif), le dispositif utilisé permettra de déterminer la position des marquages gravés dans la lentille ou imprimés sur l'une de ses faces, de manière à déterminer l'orientation de son axe dit de l'horizontale.

A ce stade, le logiciel de traitement a donc acquis et mémorisé le référentiel optique de la lentille ophtalmique 10 défini par son point de centrage P1 et par sa ligne de repérage 11. Ce référentiel est donc défini dans un plan de référence, qui est en l'espèce orthogonal à un axe optique de la lentille (axe qui traverse les faces avant et arrière de la lentille) et qui est confondu avec le plan moyen C4 du cercle 21 de la monture de lunettes 20 (lorsque la lentille 10 est montée sur la monture de lunettes 20).

A ce stade, le logiciel de traitement a également acquis et mémorisé, d'une part, le référentiel du cercle 21 de la monture de lunettes 20 défini par le point pupillaire Pc et par le trait d'horizon 32, et, d'autre part, la position et l'orientation du profil longitudinal 30 dans le référentiel du cercle 21. Le référentiel du cercle 21 est également défini dans un plan de référence de la monture de lunettes, qui correspond ici au plan général C1 de la monture 20.

L'étape suivante consiste alors à positionner et à orienter le profil longitudinal 30 dans le référentiel optique de la lentille ophtalmique 10, de manière à déterminer suivant quel contour il faudra détourer la lentille.

Le logiciel de traitement procède alors à la mise en coïncidence des référentiels de la lentille ophtalmique 10 et du cercle 21, de manière à définir la position et l'orientation du profil longitudinal 30 non plus dans le référentiel du cercle, mais directement dans le référentiel optique de la lentille ophtalmique 10.

Cette mise en coïncidence est réalisée en deux étapes, dont une étape de superposition des deux référentiels (figure 5), et une étape de décalage des deux référentiels pour tenir compte du fait que les mesures réalisées dans ces deux référentiels ont été réalisées dans deux plans de référence C1, C4 inclinés l'un par rapport à l'autre.

Au cours de la première étape, le logiciel superpose virtuellement les deux référentiels, de manière que le point de centrage P1 de la lentille 10 se superpose au point pupillaire Pc, et de manière que la ligne de repérage 11 soit convenablement orientée par rapport au trait d'horizon 32, conformément à une prescription du futur porteur de la monture de lunettes. Tel que représenté sur la figure 5, la ligne de repérage est « convenablement orientée » lorsqu'elle se superpose au trait d'horizon 32. Bien sûr, plus généralement, la ligne de repérage sera « convenablement orientée » lorsque son orientation correspondra à l'orientation de l'axe de cylindre ou de l'axe de l'horizontale prescrite au porteur.

Une fois les deux référentiels superposés, le logiciel commande l'affichage du profil longitudinal 30 sur l'écran de visualisation 105 du dispositif centreur-bloqueur 100 (figure 10).

Comme expliqué supra, les référentiels de la lentille et du cercle de la monture sont repérés dans des plans inclinés l'un par rapport à l'autre. Plus précisément, le plan du référentiel optique de la lentille est incliné horizontalement par rapport au plan du référentiel du cercle 21 d'un angle correspondant à l'angle de galbe $\alpha_{galbe}$ et il est incliné verticalement par rapport au plan du référentiel du cercle 21 d'un angle correspondant à l'angle pantoscopique $\alpha_{panto}$.

Cette inclinaison produit donc un décalage dont il convient de tenir compte pour assurer un centrage optimal de la lentille ophtalmique dans le cercle de la monture de lunettes.

Pour tenir compte de cette inclinaison, le logiciel de traitement décale le point pupillaire Pc par rapport au point de centrage P1 d'un vecteur de décalage comportant une composante horizontale dx et une composante verticale dy. Il décale en outre angulairement le trait d'horizon 32 par rapport à la ligne de repérage 11 d'un angle de décalage dθ.

Ces composantes horizontale dx et verticale dy du vecteur de décalage et cet angle de décalage dθ sont ici déduits non seulement de l'angle de galbe $\alpha_{galbe}$, mais aussi de l'angle pantoscopique $\alpha_{panto}$.

Pour calculer ces valeurs, on considère un premier repère orthonormé (O, X, Y, Z) représenté sur la figure 3, attaché au référentiel du cercle de la monture de lunettes. L'origine O de ce repère correspond au centre du pontet de la monture 20, le vecteur directeur X est parallèle aux grands côtés du cadre boxing 33 et le vecteur directeur Y est parallèle aux petits côtés du cadre boxing 33.

On considère également un second repère (O, Va, Vb, Vc) attaché au référentiel de la lentille 10. L'origine O de ce repère est confondue avec l'origine du premier repère. Le vecteur directeur Va correspond au transformé du vecteur PnPn1 dans le plan C4 du repère de la lentille 10, suivant les rotations d'angles de galbe $\alpha_{galbe}$ et pantoscopique $\alpha_{panto}$. Le vecteur directeur Vb correspond au transformé du vecteur PnPn2 dans le plan C4 du repère de la lentille 10, suivant les rotations d'angles de galbe $\alpha_{galbe}$ et pantoscopique $\alpha_{panto}$. Le vecteur directeur Vc est défini comme le produit vectoriel des deux premiers vecteurs directeurs Va et Vb.

On peut définir deux matrices de rotation qui permettent de passer du premier au second repère, et qui sont donc associées à l'angle de galbe $\alpha_{galbe}$ et à l'angle pantoscopique $\alpha_{panto}$. Ces deux matrices de rotation présentent les formes suivantes :

$$Rot(\alpha_{galbe}) = \begin{bmatrix} \cos(\alpha_{galbe}) & 0 & -\sin(\alpha_{galbe}) \\ 0 & 1 & 0 \\ \sin(\alpha_{galbe}) & 0 & \cos(\alpha_{galbe}) \end{bmatrix}$$

$$Rot(\alpha_{panto}) = \begin{bmatrix} 1 & 0 & 0 \\ 0 & \cos(\alpha_{panto}) & \sin(\alpha_{panto}) \\ 0 & -\sin(\alpha_{panto}) & \cos(\alpha_{panto}) \end{bmatrix}$$

Les vecteurs Va et Vb s'expriment alors de la manière suivante :

$$\vec{V_a} = Rot(\alpha_{panto})Rot(\alpha_{galbe})\begin{bmatrix} A \\ 0 \\ 0 \end{bmatrix}$$

$$\vec{V_b} = Rot(\alpha_{panto})Rot(\alpha_{galbe})\begin{bmatrix} 0 \\ -B \\ 0 \end{bmatrix}$$

Soit, formulés autrement :

$$\vec{V_a} = \begin{bmatrix} A\cos(\alpha_{galbe}) \\ A\sin(\alpha_{galbe})\sin(\alpha_{panto}) \\ A\sin(\alpha_{galbe})\cos(\alpha_{panto}) \end{bmatrix}$$

$$\vec{V_b} = \begin{bmatrix} 0 \\ -B\cos(\alpha_{panto}) \\ B\sin(\alpha_{panto}) \end{bmatrix}$$

En faisant l'hypothèse que la face avant de la lentille ophtalmique 10 est circonscrite à une sphère de rayon R et que cette sphère passe par les deux points milieux P20, P21 des deux petits côtés du cadre boxing 33, on en déduit que le centre C de cette sphère présente, dans le premier repère, les coordonnées suivantes :

$$\begin{bmatrix} (A+D)/2 \\ -B/2 \\ \sqrt{R^2 - (A/2)^2} \end{bmatrix},$$

avec D égal à la moitié de la longueur du pontet.

Ces coordonnées, exprimées dans le second repère, s'expriment alors ainsi :

$$\begin{bmatrix} D/2 \\ 0 \\ 0 \end{bmatrix} + Rot(\alpha_{panto})Rot(\alpha_{galbe})\begin{bmatrix} A/2 \\ -B/2 \\ \sqrt{R^2 - (A/2)^2} \end{bmatrix}$$

Connaissant les coordonnées de cette sphère, il est alors possible de déterminer la position du point pupillaire Pc dans le premier repère. Ses coordonnées sont les suivantes :

$$Pc = \begin{bmatrix} dPD \\ H - B \\ C_z - \sqrt{(dPD - C_x)^2 + (H - B - C_y)^2} \end{bmatrix}$$

Le point de projection du point pupillaire Pc dans le second repère est appelé point pupillaire projeté Pcp. Ses coordonnées s'expriment ainsi :

$$Pcp = Pn + \frac{u \cdot \overrightarrow{V_a}}{\|\overrightarrow{V_a}\|} + \frac{v \cdot \overrightarrow{V_b}}{\|\overrightarrow{V_b}\|} \text{, avec} \left\{ \begin{array}{l} u = \dfrac{\overrightarrow{PcPn} \cdot \overrightarrow{V_a}}{\|\overrightarrow{V_a}\|} \\ v = \dfrac{\overrightarrow{PcPn} \cdot \overrightarrow{V_b}}{\|\overrightarrow{V_b}\|} \end{array} \right\}$$

Le demi-écart pupillaire dPDc et la hauteur pupillaire Hc corrigés en tenant compte des angles de galbe et pantoscopique peuvent donc être calculés ainsi :

$$dPDc = D/2 + u \text{,}$$

et

$$Hc = B - v \text{.}$$

Par conséquent, les composantes dx et dy du vecteur de décalage s'expriment ainsi :

dx = dPDc - dPD, et
dy = Hc - H.

A titre illustratif, la composante dx du vecteur de décalage atteint une valeur de 0,7 millimètre pour une monture de lunettes fortement galbée, présentant les caractéristiques suivantes : A = 60mm ; B = 26mm ; dPD = 33 mm ; H = 13mm ; D = 18mm ; $\alpha_{panto}$ = 10° ; $\alpha_{galbe}$ = 25°.

Le calcul de l'angle de décalage dθ est réalisé de manière homologue. On considère pour ce calcul le vecteur Vaxe comme le vecteur qui définit la direction de l'axe de la lentille dans le premier repère. Ce vecteur s'exprime ainsi :

$$\overrightarrow{V_{axe}} = \begin{bmatrix} \cos(\pi - \theta_{AxeVerre}) \\ \sin(\pi - \theta_{AxeVerre}) \\ 0 \end{bmatrix}$$

On définit le vecteur Vaxe2 comme le projeté du vecteur Vaxe dans le second repère. Ce vecteur Vaxe2 s'exprime ainsi :

$$\overrightarrow{V_{axe2}} = \begin{bmatrix} \cos(\pi - \theta_{AxeVerre}) \\ \sin(\pi - \theta_{AxeVerre}) \\ t \end{bmatrix}$$

La coordonnée t peut être calculée en considérant le vecteur directeur Vc, qui égal au produit vectoriel des vecteurs Va et Vb. En effet, le produit vectoriel de ce vecteur directeur Vc par le vecteur Vaxe2 est nul. La coordonnée t du vecteur Vaxe2 peut donc être calculée au moyen de la formule suivante :

$$t = \frac{\tan(\alpha_{galbe})\cos(\pi - \theta_{AxeVerre})}{\cos(\alpha_{panto})} - \tan(\alpha_{panto})\sin(\pi - \theta_{AxeVerre})$$

Grâce à ce vecteur Vaxe2, on peut alors déduire l'angle de décalage dθ en considérant deux cas.

Si l'angle pantoscopique $\alpha_{panto}$ est non nul,

$$d\theta = \theta_{AxeVerre2} - \theta_{AxeVerre},$$

avec

$$\theta_{AxeVerre2} = \arctan\left(\frac{v1}{u1}\right), \quad u1 = \frac{-\overrightarrow{V_{Axe2}} \cdot \overrightarrow{V_a}}{\left\|\overrightarrow{V_{Axe2}}\right\|\left\|\overrightarrow{V_a}\right\|} \quad \text{et} \quad v1 = \frac{-\overrightarrow{V_{Axe2}} \cdot \overrightarrow{V_b}}{\left\|\overrightarrow{V_{Axe2}}\right\|\left\|\overrightarrow{V_b}\right\|}$$

Si l'angle pantoscopique $\alpha_{panto}$ est nul,

$$d\theta = \theta_{AxeVerre2} - \theta_{AxeVerre},$$

avec

$$\theta_{AxeVerre2} = \arctan\left(\tan(\theta_{AxeVerre})\cos(\alpha_{galble})\right)$$

A titre illustratif, l'angle de décalage dθ pour la monture de lunettes précitée est égal 4,26 degrés.

A ce stade, grâce aux valeurs des composantes horizontale dx et verticale dy du vecteur de décalage et grâce à l'angle de décalage dθ, l'unité de traitement peut précisément déterminer, comme cela apparaît sur la figure 6, la position du profil longitudinal 30' dans le référentiel de la lentille 10.

Une fois les deux référentiels mis en coïncidence, le logiciel commande l'affichage sur l'écran de visualisation 105 du profil longitudinal 30', qui est alors décalé par rapport au profil longitudinal 30 déjà affiché (figure 10). Cet affichage peut être réalisé de manière que les deux profils longitudinaux 30, 30' se superposent, afin que l'opticien puisse appréhender l'importance du décalage, ou de manière que le profil longitudinal 30' remplace le profil longitudinal 30.

Préférentiellement, le logiciel commande également l'affichage sur l'écran de visualisation 105 du contour initial (circulaire) de la lentille ophtalmique 10. De cette manière, l'opticien peut vérifier que le profil longitudinal 30' ne sort pas du contour de la lentille ophtalmique 10. Cette vérification peut bien sur également être réalisée automatiquement par le logiciel.

Si le profil longitudinal 30' sort du contour circulaire de la lentille ophtalmique 10, alors l'opticien ou le logiciel peut mettre en oeuvre un procédé de correction de la position et/ou de l'orientation du profil longitudinal 30', du type de celui décrit dans le document WO 2007/026058.

Le procédé de centrage est quoi qu'il en soit suivi, d'une étape de blocage et d'une étape de détourage de la lentille ophtalmique 10.

L'étape de blocage est réalisée par le dispositif centreur bloqueur 100 de la figure 7, au moyen de son bras de positionnement 106.

Au cours de cette étape, le bras de positionnement 106 positionne l'organe de blocage sur la face avant de la lentille ophtalmique 10, en un point de blocage donné et avec une orientation de blocage donnée par rapport au référentiel de la lentille ophtalmique. Ainsi, lorsque la lentille munie de son organe de blocage est transférée sur l'appareil de détourage, ce dernier peut connaître la position et l'orientation du référentiel de la lentille et détourer la lentille dans ce référentiel.

Le point de blocage est généralement choisi pour correspondre au centre du cadre boxing 33, c'est-à-dire au point d'intersection des diagonales de ce cadre. Cette position permet de s'assurer que lorsque la lentille est usinée, l'outil d'usinage reste à distance de l'organe de blocage et le contourne sans venir l'usiner.

Dans ce mode de réalisation de l'invention, la lentille est centrée avant d'être bloquée. De cette manière, le choix du point de blocage et de l'orientation de blocage tient déjà compte du décalage du référentiel du cercle 21 par rapport au référentiel de la lentille 10. Par conséquent, ce décalage n'a plus à être pris en compte au stade du détourage de la lentille, puisque l'organe de blocage est déjà correctement centré par rapport au profil longitudinal 30'.

En variante, selon un second mode de réalisation, on pourrait prévoir de bloquer la lentille avant même d'avoir mis le référentiel de la lentille 10 en coïncidence avec le référentiel du cercle 21 de la monture de lunettes 20. On comprend que dans ce cas, la position et l'orientation de l'organe de blocage sont déterminées en fonction de la position du profil longitudinal 30. Il convient alors, au stade du détourage, d'usiner la lentille en décalant la position et l'orientation du profil longitudinal 30' par rapport à l'organe de blocage.

L'organe de blocage est ici réalisé en trois parties, dont un gland adapté à être bloqué sur l'appareil de détourage, un élément intermédiaire appelé « pad », et un autocollant « appelé sticker » à coller sur la face avant de la lentille. Ici, le « sticker » est collé sur la lentille en même temps que le « pad » et que le gland. En effet, s'il était collé sur la lentille avant le centrage de cette lentille, il risquerait de gêner les mesures optiques de centrage. Plus précisément, quand bien même il serait transparent, ce « sticker » risquerait de rendre plus difficile et moins précise l'acquisition de la position du point de centrage P1 et de l'orientation de sa ligne de repérage 11.

Par conséquent, ici, le « pad » est tout d'abord collé sur le sticker, en le centrant et éventuellement en l'orientant convenable, puis le gland est collé sur le « pad », et enfin, l'ensemble est collé sur la lentille après l'opération de centrage.

L'étape de détourage de la lentille ophtalmique est quant à elle réalisée au moyen d'un appareil de détourage 130 du type de celui représenté schématiquement sur la figure 9. Cette opération permet de réaliser sur le chant de la lentille une nervure d'emboîtement 39 (également appelée biseau) qui s'étend selon le profil longitudinal 30' et qui est adaptée à s'emboîter dans le drageoir du cercle 21 de la monture 20 sélectionnée par le porteur.

Cet appareil de détourage 130 comprend ici des moyens de support formés par des arbres 131 de maintien et d'entraînement en rotation de la lentille ophtalmique 10 autour d'un axe de blocage A4. Un tel appareil de détourage comprend en outre des moyens de détourage formés par un outil d'usinage 132 monté rotatif autour d'un axe d'usinage A5 qui est ici sensiblement parallèle à l'axe de blocage A4, mais qui pourrait également être incliné par rapport à cet axe.

L'outil d'usinage 132 et/ou les arbres 131 sont pourvus de deux mobilités relatives, dont une mobilité radiale permettant de modifier l'écartement entre l'axe d'usinage A5 et l'axe de blocage A4, et une mobilité de translation axiale selon un axe parallèle à l'axe de blocage A4.

L'appareil de détourage 130 comporte en outre un dispositif électronique et/ou informatique (non représenté) qui est pourvu, d'une part, de moyens de communication avec le dispositif centreur-bloqueur 100, et, d'autre part, de moyens de pilotage des mobilités des arbres 131 et de l'outil d'usinage 132. Ce dispositif électronique et/ou informatique permet en particulier de piloter, pour chaque position angulaire de la lentille 10 autour de l'axe de blocage A4, l'écartement radial entre l'outil d'usinage 132 et l'axe de blocage A4, ainsi que la position axiale de la tranche de la lentille par rapport à la surface de travail de l'outil d'usinage 132.

Comme le montre plus particulièrement la figure 9, l'outil d'usinage 132 est en l'espèce constitué par une meule principale de forme, c'est-à-dire par une meule présentant en creux, à la manière d'un négatif, un profil d'usinage complémentaire de la section de la nervure d'emboîtement 39 à obtenir en relief sur la tranche de la lentille à usiner.

Dans le mode de réalisation exposé, le calcul du décalage entre les deux référentiels est réalisé par le dispositif centreur-bloqueur 100. Bien sûr, ce calcul pourrait également être réalisé par le dispositif électronique et/ou informatique de l'appareil de détourage 130.

En particulier, dans le cas où la monture de lunettes choisie par le porteur est du type percé (sans cercle), les positions des trous de perçage seront avantageusement déterminées dans le référentiel de la lentille ophtalmique 10, après sa mise en coïncidence avec le référentiel du cercle 21 de la monture de lunettes 20. On pourra également prévoir de calculer l'orientation de l'axe de perçage de chacun des trous de perçage dans ce même référentiel, afin de tenir compte de l'angle de galbe $\alpha_{galbe}$ et de l'angle pantoscopique $\alpha_{panto}$ de la monture de lunettes.

Dans un autre mode de réalisation de l'invention, on peut prévoir d'utiliser un registre de base de données pour déterminer les composantes dx, dy du vecteur de décalage et l'angle de décalage dθ.

Ce registre de base de données comportera alors une pluralité d'enregistrements chacun associés à un type de montures de lunettes référencé. Chaque enregistrement comprendra un identifiant du type de montures de lunettes référencé, un paramètre de galbe ou de compensation de galbe propre à ce type de montures de lunettes référencé, et un paramètre pantoscopique ou de compensation pantoscopique propre à ce type de montures de lunettes référencé.

Ce paramètre de galbe sera préférentiellement formé par l'angle de galbe $\alpha_{galbe}$ de la monture. Le paramètre pantoscopique sera quant à lui préférentiellement formé par l'angle pantoscopique $\alpha_{panto}$ de la monture.

De cette manière, pour acquérir le paramètre de galbe de la monture 20 choisie par le porteur, il faudra chercher dans le registre un enregistrement correspondant à cette monture de lunettes 20, puis lire dans cet enregistrement le paramètre de galbe associé.

On pourra éventuellement prévoir, si aucun enregistrement n'est trouvé, d'acquérir les angles de galbe $\alpha_{galbe}$ et/ou pantoscopique $\alpha_{panto}$ de la monture de lunettes 20 par l'une des méthodes décrites précédemment, puis de créer dans le registre un nouvel enregistrement correspondant à la monture de lunettes 20 choisie, afin d'y mémoriser le paramètre de galbe acquis.

Par la suite, les calculs des composantes dx, dy du vecteur de décalage et de l'angle de décalage dθ pourront être effectués selon la même méthode que celle décrite supra.

En variante, le registre de base de données pourra comporter un identifiant du type de montures de lunettes référencé, un paramètre de compensation de galbe propre à ce type de montures de lunettes référencé, et un paramètre de compensation pantoscopique propre à ce type de montures de lunettes référencé.

Dans cette variante, les paramètres mémorisés ne sont donc plus les angles de galbe $\alpha_{galbe}$ et/ou pantoscopique

$\alpha_{panto}$ de la monture de lunettes 20, mais directement les composantes dx, dy du vecteur de décalage et l'angle de décalage d$\theta$. Ce registre permet ainsi de se passer de l'étape de calcul de ces composantes dx, dy et de l'angle de décalage d$\theta$.

Dans cette variante, chaque enregistrement du registre de base de données est associé à une monture de lunettes et comporte une pluralité de champs chacun associés à une prescription du porteur. Plus précisément, chaque champ est associé à un angle $\theta_{AxeVerre}$ donné, à un demi-écart pupillaire dPD donné et à une hauteur pupillaire H donnée.

L'opticien pourra ainsi, à partir de l'identifiant de la monture, rechercher dans le registre un enregistrement correspondant à la monture choisie par le porteur, puis, à partir des prescriptions $\theta_{AxeVerre}$, dPD et H du porteur, déterminer le champ correspondant à ces prescriptions, afin d'acquérir les composantes dx, dy du vecteur de décalage et l'angle de décalage d$\theta$ correspondant.

Bien sûr, ici également, si ces données ne sont pas déjà mémorisées dans le registre de base de données, on pourra prévoir de les acquérir suivant l'une des méthodes décrites précédemment, afin de les mémoriser dans un nouveau champ d'un enregistrement du registre de base de données.

## Revendications

1. Procédé de préparation d'une lentille ophtalmique (10) en vue de son montage dans un cercle (21) d'une monture de lunettes (20), comportant les étapes consistant à :

   - acquérir un référentiel de la lentille ophtalmique (10) défini au moins par un premier point de centrage (P1) et par une première direction d'orientation (11),
   - acquérir, d'une part, un référentiel du cercle (21) de la monture de lunettes (20) défini au moins par un second point de centrage (Pc) et par une seconde direction d'orientation (32), et, d'autre part, un profil longitudinal (30, 30') qui est représentatif de la forme du cercle (21) et qui est repéré dans le référentiel du cercle (21), et
   - mettre les référentiels de la lentille ophtalmique (10) et du cercle (21) de la monture de lunettes (20) en coïncidence, en positionnant les deux points de centrage (P1, Pc) l'un par rapport à l'autre et en orientant les deux directions d'orientation (11, 32) l'une par rapport à l'autre, de manière à définir la position et l'orientation du profil longitudinal (30, 30') dans le référentiel de la lentille ophtalmique (10), le procédé comportant une étape d'acquisition d'un paramètre de galbe ($\alpha_{galbe}$) ou de compensation de galbe (d$\theta$), relatif à la cambrure de la monture de lunettes (20), et étant **caractérisé en ce que** l'orientation relative des deux directions d'orientation (11, 32) est réalisée en fonction de ce paramètre de galbe ($\alpha_{galbe}$) ou de compensation de galbe (d$\theta$) acquis.

2. Procédé de préparation selon la revendication précédente, qui comporte une étape de détermination d'un paramètre pantoscopique ($\alpha_{panto}$) ou de compensation pantoscopique relatif à l'inclinaison verticale du cercle (21) par rapport au plan général (C1) de la monture de lunettes (20), et dans lequel l'orientation relative des deux directions d'orientation (11, 32) est réalisée en fonction de ce paramètre pantoscopique ($\alpha_{panto}$) ou de compensation pantoscopique.

3. Procédé de préparation selon l'une des revendications précédentes, qui comporte une étape de détermination d'un paramètre pantoscopique ($\alpha_{panto}$) ou de compensation pantoscopique relatif à l'inclinaison verticale du cercle (21) par rapport au plan général (C1) de la monture de lunettes (20), et dans lequel le positionnement relatif des deux points de centrage (P1, Pc) est réalisé en fonction dudit paramètre pantoscopique ($\alpha_{panto}$) ou de compensation pantoscopique.

4. Procédé de préparation selon l'une des revendications précédentes, dans lequel le positionnement relatif des deux points de centrage (P1, Pc) est réalisé en fonction dudit paramètre de galbe ($\alpha_{galbe}$) ou de compensation de galbe (d$\theta$).

5. Procédé de préparation selon l'une des revendications précédentes, dans lequel ledit paramètre de galbe ($\alpha_{galbe}$) est déduit d'un palpage, avec ou sans contact, des drageoirs des deux cercles (21) de la monture de lunettes (20).

6. Procédé de préparation selon l'une des revendications 1 à 4, dans lequel :

   - on recherche, dans un registre de base de données dont chaque enregistrement est associé à un type de montures de lunettes référencé et contient un paramètre de galbe ou de compensation de galbe propre à ce type de montures de lunettes référencé, un enregistrement correspondant à ladite monture de lunettes (20), puis
   - si un enregistrement correspondant est trouvé, ladite étape d'acquisition est réalisée par lecture dans ledit enregistrement correspondant dudit paramètre de galbe ($\alpha_{galbe}$) ou de compensation de galbe (d$\theta$), ou
   - si aucun enregistrement correspondant n'est trouvé, ladite étape d'acquisition est suivie d'une étape d'écriture dans le registre d'un nouvel enregistrement correspondant à ladite monture de lunettes (20), dans lequel on mémorise le paramètre de galbe ($\alpha_{galbe}$) ou de compensation de galbe (d$\theta$) acquis.

**7.** Procédé de préparation selon l'une des revendications 2 et 3, dans lequel :

- on recherche, dans un registre de base de données dont chaque enregistrement est associé à un type de montures de lunettes référencé et contient un paramètre pantoscopique ou de compensation pantoscopique propre à ce type de montures de lunettes référencé, un enregistrement correspondant à ladite monture de lunettes (20), puis
- si un enregistrement correspondant est trouvé, ladite étape de détermination est réalisée par lecture dans ledit enregistrement correspondant dudit paramètre pantoscopique ($\alpha_{panto}$) ou de compensation pantoscopique, ou
- si aucun enregistrement correspondant n'est trouvé, ladite étape de détermination est suivie d'une étape d'écriture dans le registre d'un nouvel enregistrement correspondant à ladite monture de lunettes (20), dans lequel on mémorise le paramètre pantoscopique ($\alpha_{panto}$) ou de compensation pantoscopique déterminé.

**8.** Procédé de préparation selon l'une des revendications précédentes, dans lequel la mise en coïncidence des référentiels de la lentille ophtalmique (10) et du cercle (21) de la monture de lunettes (20) comporte :

- une étape de superposition des deux référentiels, au cours de laquelle on superpose les deux points de centrage (P1, Pc) et on oriente les deux directions d'orientation (11, 32) l'une par rapport à l'autre conformément à une prescription du futur porteur de la monture de lunettes (20), puis,
- une étape de décalage des deux référentiels, au cours de laquelle, d'une part, on décale le second point de centrage (Pc) par rapport au premier point de centrage (P1) d'un vecteur de décalage (dx, dy) déduit dudit paramètre de galbe ($\alpha_{galbe}$) ou de compensation de galbe (d$\theta$), et, d'autre part, on décale angulairement la seconde direction d'orientation (32) par rapport à la première direction d'orientation (11) d'un angle de décalage (d$\theta$) déduit dudit paramètre de galbe ($\alpha_{galbe}$) ou de compensation de galbe (d$\theta$).

**9.** Procédé de préparation selon la revendication précédente, dans lequel ledit paramètre de compensation de galbe est constitué par ledit angle de décalage (d$\theta$).

**10.** Procédé de préparation selon l'une des deux revendications précédentes, comportant une étape d'affichage en superposition, d'une part, du profil longitudinal (30) défini dans le référentiel de la lentille ophtalmique (10) après que celui-ci ait été seulement superposé au référentiel du cercle (21) de la monture de lunettes (20), et, d'autre part, du profil longitudinal (30') défini dans le référentiel de la lentille ophtalmique (10) après que celui-ci ait été décalé et mis en coïncidence par rapport au référentiel du cercle (21) de la monture de lunettes (20).

**11.** Procédé de préparation selon l'une des revendications 1 à 9, comportant une étape d'affichage du profil longitudinal (30') défini dans le référentiel de la lentille ophtalmique (10) après que celui-ci ait été mis en coïncidence par rapport au référentiel du cercle (21) de la monture de lunettes (20).

**12.** Procédé de préparation selon l'une des deux revendications précédentes, dans lequel, au cours de l'étape d'affichage, on affiche le contour de la lentille ophtalmique (10) non détourée en superposition avec chaque profil longitudinal (30, 30') affiché.

**13.** Procédé de préparation selon l'une des revendications précédentes, comportant :

- une étape de blocage de la lentille ophtalmique (10) par un dispositif de blocage (100), au cours de laquelle un organe de blocage est fixé sur la lentille ophtalmique (10) en un point de blocage donné et avec une orientation de blocage donnée, et
- une étape de détourage de la lentille ophtalmique (10) par un dispositif de détourage (130), au cours de laquelle la lentille ophtalmique (10) est détourée avec, sur son chant, une nervure ou une rainure d'emboîtement (39) s'étendant selon le profil longitudinal (30').

**14.** Procédé de préparation selon la revendication précédente, dans lequel la mise en coïncidence des référentiels de la lentille ophtalmique (10) et du cercle (21) de la monture de lunettes (20) est réalisée avant le blocage de la lentille ophtalmique, de manière que la position du point de blocage et l'orientation de blocage sont déterminées dans le référentiel du cercle (21) de la monture de lunettes (20) après que celui-ci ait été mis en coïncidence avec le référentiel de la lentille ophtalmique (10).

15. Procédé de préparation selon la revendication 13, dans lequel la mise en coïncidence du référentiel de la lentille ophtalmique (10) et du cercle (21) de la monture de lunettes (20) est réalisée après le blocage de la lentille ophtalmique, et avant le détourage de la lentille ophtalmique.

**Patentansprüche**

1. Verfahren zur Vorbereitung einer ophthalmischen Linse (10) für ihren Einbau in eine Umrandung (21) einer Brillenfassung (20), das die Schritte aufweist, die darin bestehen:

   - ein Bezugssystem der ophthalmischen Linse (10) zu erarbeiten, das durch mindestens einen ersten Zentrierpunkt (P1) und eine erste Ausrichtrichtung (11) definiert ist,
   - einerseits ein Bezugssystem der Umrandung (21) der Brillenfassung (20), das mindestens durch einen zweiten Zentrierpunkt (Pc) und durch eine zweite Ausrichtrichtung (32) definiert ist, und andererseits ein Längsprofil (30, 30') zu erarbeiten, das für die Form der Umrandung (21) repräsentativ und in dem Bezugssystem der Umrandung (21) gekennzeichnet ist, und
   - die Bezugssysteme der ophthalmischen Linse (10) und der Umrandung (21) der Brillenfassung (20) in Überdeckung zu bringen, indem die zwei Zentrierpunkte (P1, Pc) zueinander positioniert und die zwei Ausrichtrichtungen (11, 32) zueinander ausgerichtet werden, um die Position und die Ausrichtung des Längsprofils (30, 30') im Bezugssystem der ophthalmischen Linse (10) zu definieren,
   wobei das Verfahren einen Schritt der Erarbeitung eines Wölbungsparameters ($\alpha_{Wölbung}$) oder Wölbungskompensationsparameters (d$\theta$) bezüglich der Krümmung der Brillenfassung (20) aufweist und **dadurch gekennzeichnet ist, dass** die relative Ausrichtung der zwei Ausrichtrichtungen (11, 32) abhängig von diesem erarbeiteten Wölbungsparameter ($\alpha_{Wölbung}$) oder Wölbungskompensationsparameter (d$\theta$) durchgeführt wird.

2. Vorbereitungsverfahren nach dem vorhergehenden Anspruch, das einen Schritt der Bestimmung eines pantoskopischen Parameters ($\alpha_{panto}$) oder pantoskopischen Kompensationsparameters betreffend die vertikale Neigung der Umrandung (21) bezüglich der allgemeinen Ebene (C1) der Brillenfassung (20) aufweist, und wobei die relative Ausrichtung der zwei Ausrichtrichtungen (11, 32) abhängig von diesem pantoskopischen Parameter ($\alpha_{panto}$) oder pantoskopischen Kompensationsparameter durchgeführt wird.

3. Vorbereitungsverfahren nach einem der vorhergehenden Ansprüche, das einen Schritt der Bestimmung eines pantoskopischen Parameters ($\alpha_{panto}$) oder pantoskopischen Kompensationsparameters betreffend die vertikale Neigung der Umrandung (21) bezüglich der allgemeinen Ebene (C1) der Brillenfassung (20) aufweist, und wobei die relative Positionierung der zwei Zentrierpunkte (P1, Pc) abhängig vom pantoskopischen Parameter ($\alpha_{panto}$) oder pantoskopischen Kompensationsparameter durchgeführt wird.

4. Vorbereitungsverfahren nach einem der vorhergehenden Ansprüche, wobei die relative Positionierung der zwei Zentrierpunkte (P1, Pc) abhängig vom Wölbungsparameter ($\alpha_{Wölbung}$) oder Wölbungskompensationsparameter (d$\theta$) durchgeführt wird.

5. Vorbereitungsverfahren nach einem der vorhergehenden Ansprüche, wobei der Wölbungsparameter ($\alpha_{Wölbung}$) von einem Abtasten, mit oder ohne Kontakt, der Nuten der zwei Umrandungen (21) der Brillenfassung (20) abgeleitet wird.

6. Vorbereitungsverfahren nach einem der Ansprüche 1 bis 4, wobei:

   - in einem Datenbankregister, von dem jeder Datensatz einer gekennzeichneten Art von Brillenfassungen zugeordnet ist und einen dieser gekennzeichneten Art von Brillenfassungen eigenen Wölbungsparameter oder Wölbungskompensationsparameters enthält, ein der Brillenfassung (20) entsprechender Datensatz gesucht wird, dann
   - wenn ein entsprechender Datensatz gefunden wird, der Erarbeitungsschritt durch Lesen des Wölbungsparameters ($\alpha_{Wölbung}$) oder Wölbungskompensationsparameters (d$\theta$) in dem entsprechenden Datensatz durchgeführt wird, oder
   - wenn kein entsprechender Datensatz gefunden wird, auf den Erarbeitungsschritt ein Schritt des Eintragens eines neuen der Brillenfassung (20) entsprechenden Datensatzes in das Register folgt, in dem der erarbeitete Wölbungsparameter ($\alpha_{Wölbung}$) oder Wölbungskompensationsparameter (d$\theta$) gespeichert wird.

7. Vorbereitungsverfahren nach einem der Ansprüche 2 und 3, wobei:

- in einem Datenbankregister, von dem jeder Datensatz einem gekennzeichneten Brillenfassungstyp zugeordnet ist und einen dieser gekennzeichneten Art von Brillenfassungen eigenen pantoskopischen Parameter oder pantoskopischen Kompensationsparameter enthält, ein der Brillenfassung (20) entsprechender Datensatz gesucht wird, dann
- wenn ein entsprechender Datensatz gefunden wird, der Bestimmungsschritt durch Lesen des pantoskopischen Parameters ($\alpha_{panto}$) oder pantoskopischen Kompensationsparameters in dem entsprechenden Datensatz durchgeführt wird, oder
- wenn kein entsprechender Datensatz gefunden wird, auf den Bestimmungsschritt ein Schritt des Eintragens eines neuen der Brillenfassung (20) entsprechenden Datensatzes in das Register folgt, in dem der bestimmte pantoskopische Parameter ($\alpha_{panto}$) oder pantoskopische Kompensationsparameter gespeichert wird.

8. Vorbereitungsverfahren nach einem der vorhergehenden Ansprüche, wobei das einander Überdecken der Bezugssysteme der ophthalmischen Linse (10) und der Umrandung (21) der Brillenfassung (20) aufweist:

- einen Schritt des Übereinanderlegens der zwei Bezugssysteme, während dessen die zwei Zentrierpunkte (P1, Pc) übereinandergelegt und die zwei Ausrichtrichtungen (11, 32) entsprechend einer Verschreibung des zukünftigen Trägers der Brillenfassung (20) zueinander ausgerichtet werden, dann
- einen Schritt des Verschiebens der zwei Bezugssysteme, während dessen einerseits der zweite Zentrierpunkt (Pc) bezüglich des ersten Zentrierpunkts (P1) um einen vom Wölbungsparameter ($\alpha_{Wölbung}$) oder Wölbungskompensationsparameter (d$\theta$) abgeleiteten Verschiebevektor (dx, dy) verschoben wird, und andererseits die zweite Ausrichtrichtung (32) bezüglich der ersten Ausrichtrichtung (11) um einen vom Wölbungsparameter ($\alpha_{Wölbung}$) oder Wölbungskompensationsparameter (d$\theta$) abgeleiteten Verschiebewinkel (d$\theta$) winkelmäßig verschoben wird.

9. Vorbereitungsverfahren nach dem vorhergehenden Anspruch, wobei der Wölbungskompensationsparameter aus dem Verschiebewinkel (d$\theta$) besteht.

10. Vorbereitungsverfahren nach einem der zwei vorhergehenden Ansprüche, das einen Schritt der übereinanderliegenden Anzeige, einerseits des im Bezugssystem der ophthalmischen Linse (10), nachdem dieses nur auf das Bezugssystem der Umrandung (21) der Brillenfassung (20) aufgelegt wurde, definierten Längsprofils (30), und andererseits des im Bezugssystem der ophthalmischen Linse (10), nachdem dieses verschoben und mit dem Bezugssystem der Umrandung (21) der Brillenfassung (20) in Überdeckung gebracht wurde, definierten Längsprofils (30') aufweist.

11. Vorbereitungsverfahren nach einem der Ansprüche 1 bis 9, das einen Schritt der Anzeige des im Bezugssystem der ophthalmischen Linse (10), nachdem dieses mit dem Bezugssystem der Umrandung (21) der Brillenfassung (20) in Überdeckung gebracht wurde, definierten Längsprofils (30') enthält.

12. Vorbereitungsverfahren nach einem der zwei vorhergehenden Ansprüche, wobei während des Anzeigeschritts der Umriss der rohkantigen ophthalmischen Linse (10) in Überlagerung mit jedem angezeigten Längsprofil (30, 30') angezeigt wird.

13. Vorbereitungsverfahren nach einem der vorhergehenden Ansprüche, das aufweist:

- einen Schritt des Blockierens der ophthalmischen Linse (10) durch eine Blockiervorrichtung (100), während dessen ein Blockierorgan an der ophthalmischen Linse (10) an einem gegebenen Blockierpunkt und mit einer gegebenen Blockierausrichtung befestigt wird, und
- einen Schritt der Kantenbearbeitung der ophthalmischen Linse (10) durch eine Kantenbearbeitungsvorrichtung (130), während dessen die ophthalmische Linse (10) mit auf ihrer Hochkante einer Einfügerippe oder -rille (39), die sich gemäß dem Längsprofil (30') erstreckt, kantenbearbeitet wird.

14. Vorbereitungsverfahren nach dem vorhergehenden Anspruch, wobei das einander Überdecken der Bezugssysteme der ophthalmischen Linse (10) und der Umrandung (21) der Brillenfassung (20) vor dem Blockieren der ophthalmischen Linse durchgeführt wird, damit die Position des Blockierpunkts und die Blockierausrichtung im Bezugssystem der Umrandung (21) der Brillenfassung (20) bestimmt werden, nachdem dieses mit dem Bezugssystem der ophthalmischen Linse (10) in Überdeckung gebracht wurde.

**15.** Vorbereitungsverfahren nach Anspruch 13, wobei das einander Überdecken der Bezugssysteme der ophthalmischen Linse (10) und der Umrandung (21) der Brillenfassung (20) nach dem Blockieren der ophthalmischen Linse und vor dem Kantenschneiden der ophthalmischen Linse durchgeführt wird.

**Claims**

**1.** A method of preparing an ophthalmic lens (10) for monitoring in a rim (21) of an eyeglass frame (20), the method comprising the steps consisting in:

• acquiring a frame of reference of the ophthalmic lens (10) defined at least by a first centering point (P1) and by a first orientation direction (11);
• acquiring firstly a frame of reference of the rim (21) of the eyeglass frame (20) defined at least by a second centering point (Pc) and by a second orientation direction (32), and secondly a longitudinal profile (30, 30') that is representative of the shape of the rim (21) and that is identified in the frame of reference of the rim (21); and
• putting the frames of reference of the ophthalmic lens (10) and of the rim (21) of the eyeglass frame (20) into coincidence, by positioning the two centering points (P1, Pc) relative to each other and by orienting the two orientation directions (11, 32) relative to each other in such a manner as to define the position and the orientation of the longitudinal profile (30, 30') in the frame of reference of the ophthalmic lens (10);
the method being **characterized in that** it includes a step of acquiring a curvature parameter (alphacurve) or a curvature compensation parameter (dtheta) relating to the camber of the eyeglass frame (20), and **in that** the relative orientation of the two orientation directions (11, 32) is determined as a function of said acquired curvature (alphacurve) or curvature compensation (dtheta) parameter.

**2.** A preparation method according to the preceding claim, including a step of determining a pantoscopic parameter (alphapanto) or a pantoscopic compensation parameter relating to the vertical inclination of the rim (21) relative to the general plane (C1) of the eyeglass frame (20), and wherein the relative orientation of the two orientation directions (11, 32) is determined as a function of said pantoscopic parameter (alphapanto) or of said pantoscopic compensation parameter.

**3.** A centering method according to either preceding claim, including a step of determining a pantoscopic parameter (alphapanto) or a pantoscopic compensation parameter relating to the vertical inclination of the rim (21) relative to the general plane (C1) of the eyeglass frame (20), and wherein the relative positioning of the two centering points (P1, Pc) is performed as a function of said pantoscopic parameter (alphapanto) or of said pantoscopic compensation parameter.

**4.** A preparation method according to any preceding claim,
wherein the two centering points (P1, Pc) are positioned relative to each other as a function of said curvature parameter (alphacurve) or of said curvature compensation parameter (dtheta).

**5.** A preparation method according to any preceding claim,
wherein said curvature parameter (alphacurve) is deduced by feeling the bezels of the two rims (21) of the eyeglass frame (20), the feeling being performed with or without contact.

**6.** A preparation method according to any one of claims 1 to 4, including the following steps:

• searching a database register in which each record is associated with a referenced eyeglass frame type and contains a curvature parameter or a curvature compensation parameter specific to said referenced eyeglass frame type, for a record corresponding to said eyeglass frame (20), and then
• if a corresponding record is found, performing said acquisition step by reading in said corresponding record said curvature parameter (alphacurve) or said curvature compensation parameter (dtheta), or
• if no corresponding record is found, following said acquisition step by a step of writing a new record in the register corresponding to said eyeglass frame (20) in which the acquired curvature parameter (alphacurve) or curvature compensation parameter (dtheta) is stored.

**7.** A preparation method according to claim 2 or claim 3, including the following steps:

• searching a database register in which each record is associated with a referenced eyeglass frame type and contains a pantoscopic parameter or a pantoscopic compensation parameter specific to said referenced eyeglass frame type, for a record corresponding to said eyeglass frame (20); and then
• if a corresponding record is found, performing said determination step by reading said pantoscopic parameter (alphapanto) or said pantoscopic compensation parameter from said corresponding record, or
• if no corresponding record is found, following said determination step by a step of writing a new record in the register corresponding to said eyeglass frame (20), in which the determined pantoscopic parameter (alphapanto) or pantoscopic compensation parameter is stored.

8. A preparation method according to any preceding claim, in which putting the frames of reference of the ophthalmic lens (10) and of the rim (21) of the eyeglass frame (20) comprises:

   • a step of superposing the two frames of reference, during which the two centering points (P1, Pc) are superposed and the two orientation directions (11, 32) are oriented relative to each other in accordance with a prescription for the future wearer of the eyeglass frame (20); and then
   • a step of offsetting the two frames of reference, during which, firstly the second centering point (Pc) is offset relative to the first centering point (P1) by an offset vector (dx, dy) deduced from said curvature parameter (alphacurve) or from said curvature compensation parameter (dtheta), and secondly the second orientation direction (32) is offset angularly relative to the first orientation direction (11) by an offset angle (dtheta) deduced from said curvature parameter (alphacurve) or from said curvature compensation parameter (dtheta).

9. A preparation method according to the preceding claim,
   wherein said curvature compensation parameter is constituted by said offset angle (dtheta).

10. A preparation method according to either one of the two preceding claims, including a step of displaying in superposition, firstly the longitudinal profile (30) defined in the frame of reference of the ophthalmic lens (10) after it has been merely superposed on the frame of reference of the rim (21) of the eyeglass frame (20), and secondly the longitudinal profile (30') defined in the frame of reference of the ophthalmic lens (10) after it has been offset and put into coincidence relative to the frame of reference of the rim (21) of the eyeglass frame (20).

11. A preparation method according to any one of claims 1 to 9, including a step of displaying the longitudinal profile (30') defined in the frame of reference of the ophthalmic lens (10) after it has been put into coincidence relative to the frame of reference of the rim (21) of the eyeglass frame (20).

12. A preparation method according to either one of the two preceding claims, wherein, during the display step, the outline of the non-shaped ophthalmic lens (10) is displayed in superposition on each displayed longitudinal profile (30, 30').

13. A preparation method according to any preceding claim, the method comprising:

    • a step of blocking the ophthalmic lens (10) by means of a blocking device (100), during which a blocking member is fastened on the ophthalmic lens (10) at a given blocking point and with a given blocking orientation; and
    • a step of shaping the ophthalmic lens (10) by means of a shaper device (130), during which the ophthalmic lens (10) is shaped so as to present, on its edge face, an engagement ridge or groove (39) extending along the longitudinal profile (30').

14. A preparation method according to the preceding claim,
    wherein the frames of reference of the ophthalmic lens (10) and of the rim (21) of the eyeglass frame (20) are put into coincidence before the ophthalmic lens is blocked, so that the position of the blocking point and the orientation of the blocking are determined in the frame of reference of the rim (21) of the eyeglass frame (20) after it has been put into coincidence with the frame of reference of the ophthalmic lens (10).

15. A preparation method according to claim 13, wherein the frames of reference of the ophthalmic lens (10) and of the rim (21) of the eyeglass frame (20) are put into coincidence after the ophthalmic lens has been blocked and before the ophthalmic lens is shaped.

Fig.1

Fig.2

Fig.3

Fig.4

10

P1

11

Fig.5

10

11=32

P1=Pc

10

30'

32

Pc

dx

dy

P1

dθ

11

Fig.6

Fig.7

Fig.8

Fig.10

Fig.9

**EP 2 196 845 B1**

## RÉFÉRENCES CITÉES DANS LA DESCRIPTION

**Documents brevets cités dans la description**

- WO 2007128925 A
- US 5802731 A
- US 5617155 A
- ES 2043546
- WO 2007026058 A